# EUROPEAN PATENT APPLICATION

(11) **EP 4 769 279 A1**
(43) Date of publication of application: **01.07.2026**
(21) Application number: 25225075.8
(22) Date of filing: 18.12.2025
(51) Int. Cl.: G06Q 30/0242, G06Q 30/0251, G06Q 30/0241, G06N 20/00

(54) **ADVERTISING CAMPAIGN MANAGEMENT ENGINE**

(30) Priority: 26.12.2024 US 202419002247
(71) Applicant: eBay Inc., San Jose, CA 95125 (US)
(72) Inventor: CHEN, Xi, San Jose, 95125 (US); SHEN, Yuming, San Jose, 95125 (US)
(74) Representative: Müller-Boré & Partner Patentanwälte PartG mbB

(57) **Abstract**

Methods, systems, and computer storage media for providing an advertising campaign management engine in an artificial intelligence system are described. Advertising campaign management refers to the process of planning, executing, monitoring, and optimizing advertising campaigns. Operationally, first, high-conversion design modeling and mining analyzes performance data and user preferences to identify design elements-such as image style and text layout-that drive engagement. Second, design requirement generation converts ad optimization profiles into structured prompts that guide the refinement of ad designs. Lastly, design fine-tuning leverages advanced generative models to adjust ad elements, such as images and layouts, based on the generated requirements. The advertising campaign management engine supports an iterative process that enables automated updates and optimizations, allowing ads to be tailored to specific demographics. For example, it could produce quirky designs for young adults or simplified layouts for seniors. Refined ads are then deployed and continuously monitored for performance improvements.

## Description

### BACKGROUND

Users can interact with generative artificial intelligence technologies in different types of applications and services to accomplish computing tasks. Generative AI refers to a class of AI systems and algorithms that are designed to generate new data or content that is similar to, or in some cases, entirely different from data they are trained on. Generative AI systems can create support text generation, image generation, music and audio generation, video generation and data synthesis. In particular, generative AI systems can support an item listing system in several ways to improve operational efficiency, customer engagement, and online shopping. For example, an item listing system may employ a generative AI system for content generation (e.g., product descriptions), personalized shopping experiences (e.g., recommendation engines), product discovery (e.g., visual search), and security management (e.g., fraud detection). The item listing system can leverage generative AI through Application Programming Interfaces (APIs), pre-trained models, and custom AI solutions to enhance item listing system functionality.

### SUMMARY

Various aspects of the technology described herein are generally directed to systems, methods, and computer storage media for, among other things, providing an advertising campaign management using an advertising campaign management engine in an artificial intelligence system. Advertising campaign management refers to the process of planning, executing, monitoring, and optimizing advertising efforts to achieve specific business objectives. Advertising campaign management involves targeting the right audience, selecting appropriate ad formats, tracking performance metrics, and making data-driven adjustments to maximize engagement, conversions, and return on investment. The advertising campaign management engine of this technical solution integrates both historical and real-time performance data to dynamically refine ad designs.

The advertising campaign management engine comprises three main components. First, high-conversion design modeling and mining analyzes user preferences to identify design elements-such as image style and text layout-that drive engagement. Second, design requirement generation converts user profiles or user group profiles into structured prompts that guide the refinement of ad designs. Lastly, design fine-tuning leverages advanced generative models to adjust ad elements, such as images and layouts, based on the generated requirements. The advertising campaign management engine supports an iterative process that enables automated updates and optimizations, allowing ads to be tailored to specific demographics. For example, it could produce quirky designs for young adults or simplified layouts for seniors. Refined ads are then deployed and continuously monitored for performance improvements. The benefits of this approach include personalized and relevant ad experiences for users, increased conversion rates through real-time adjustments, automated refinement that reduces manual effort and delays, and scalability to adapt to evolving market needs and user preferences.

Operationally, the advertising campaign management engine optimizes ad campaigns by leveraging historical data, user feedback, and advanced generative models. The process begins with collecting ad campaign data, such as design-performance metrics (clicks, conversion rates) and/or user feedback (explicit surveys or implicit engagement). This data is used to identify patterns and guide ad refinement.

Offline mining processes analyze ad design-performance data to understand which layouts, text styles, and imagery yield high engagement. User feedback is mined to uncover audience preferences, such as older audiences favoring detailed descriptions and large fonts, while younger users prefer minimalist designs. The data helps train an ad optimization model to determine factors influencing ad layout and content, as well as image manipulation preferences for different demographic segments. Using the ad optimization model and an advertising campaign, ad optimization profile for an advertising campaign can be generated.

Condition-based text template generators use these insights (i.e., ad optimization profile) to recommend adjustments for ad layouts and images. For instance, an ad for middle-aged professionals may have a bold, dark blue headline, while an ad for a younger audience may emphasize a striking image with minimal text. Advertisers provide the raw campaign elements, such as text and images, and the system applies tailored adjustments. A design requirement generator is used to generate a fine-tuning prompt for advertising campaigns.

Generative models are used to create the final ad. For example, a multi-modal ad layout generation model ensures a cohesive placement of text and visuals, while an ad image manipulation model adjusts visual elements like brightness and color balance. The refined ads are deployed, and their performance is continuously monitored. If performance is suboptimal, the advertising campaign management engine iterates by experimenting with tweaks to improve engagement. By automating the ad refinement process, the advertising campaign management engine creates personalized, relevant ads, streamlining campaign management while reducing manual effort. Its scalability and adaptability ensure its effectiveness in dynamic advertising environments.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The technology described herein is described in detail below with reference to the attached drawing figures, wherein:
FIG. 1A - 1D are schematics of an artificial intelligence system for providing advertising campaign management in an item listing system, in accordance with aspects of the technology described herein;
FIG. 2A is a block diagram of an artificial intelligence system for providing advertising campaign management in an item listing system, in accordance with aspects of the technology described herein;
FIG. 2B is a flow diagram of an artificial intelligence system for providing advertising campaign management in an item listing system, in accordance with aspects of the technology described herein;
FIG. 3 provides a first exemplary method of providing advertising campaign management in an item listing system, in accordance with aspects of the technology described herein;
FIG. 4 provides a second exemplary method of providing advertising campaign management in an item listing system, in accordance with aspects of the technology described herein;
FIG. 5 provides a third exemplary method of providing advertising campaign management in an item listing system, in accordance with aspects of the technology described herein
FIG. 6 provides a block diagram of an exemplary item listing system computing environment suitable for use in implementing aspects of the technology described herein;
FIG. 7 provides a block diagram of an exemplary distributed computing environment suitable for use in implementing aspects of the technology described herein; and
FIG. 8 is a block diagram of an exemplary computing environment suitable for use in implementing aspects of the technology described herein.

### DETAILED DESCRIPTION OF THE INVENTION

### OVERVIEW

An item listing system and platform support storing items (products or assets) in item databases and providing a search system for receiving queries and identifying search result items based on the queries. An item (e.g., physical item or digital item) refers to a product or asset that is provided for listing on an item listing platform. Search systems support identifying, for received queries, result items from item databases. Item databases can specifically be for content platform or item listing platforms such as EBAY content platform, developed by EBAY INC., of San Jose, California. An item listing system may also provide generative-AI-supported applications ("generative AI applications") that leverage generative AI models (e.g., Large Language Models - "LLM") to create, generate, or produce content, data or outputs. LLMs are a specific class of generative AI models that are primarily focused on generating human-like text. Generative AI models, like GPT (Generative-Pre-trained Transformer) and its variants, are designed to generate human-like text or other types of data based on the input they receive (e.g., via a prompt interface). These applications use generative AI to perform various task across different domains to provide improvement in automation, efficiency, and human-like interaction.

Digital platforms that support advertising can include online services or websites that allow businesses or individuals to promote their products, services, or content to a targeted audience. Digital platforms rely on a complex infrastructure of technologies that enable the delivery, targeting, and measurement of ads. At the core of these platforms are ad servers, which store, manage, and deliver ads to users. These servers process requests from websites or apps, matching them with the appropriate ads based on targeting criteria and delivering them in real time. Ad servers also track key performance metrics like impressions, clicks, and conversions, which are critical for reporting and analysis.

The digital platforms gather large volumes of data on user behavior, demographics, and interactions, often through cookies, pixels, or device identifiers. This data is processed to create user profiles, which are then used to segment audiences for more precise targeting. The targeting mechanisms may include contextual targeting based on the content a user is viewing, demographic targeting such as age or location, behavioral targeting based on past actions, and retargeting, which focuses on users who have previously interacted with ads. All of this is designed to ensure that the right ad reaches the right user at the right time.

To measure ad effectiveness, digital platforms employ sophisticated tracking and analytics systems. Metrics such as impressions, clicks, conversions, and return on ad spend (ROAS) are captured in real time, allowing advertisers to assess the performance of their campaigns. Machine learning algorithms further optimize these campaigns by analyzing user interactions and adapting the delivery of ads to improve engagement and conversion rates.

Furthermore, many platforms provide APIs (Application Programming Interfaces) and SDKs (Software Development Kits), which allow advertisers and third-party tools to integrate with the platform. These integrations enable automation of ad creation, management, and reporting, as well as the ability to embed ads within external websites and apps. Altogether, these technical components create a seamless, dynamic ecosystem that enables advertisers to reach highly targeted audiences, optimize ad performance, and track the success of their campaigns in real time.

Conventionally, digital platforms are not configured with a comprehensive computing logic and infrastructure to effectively fine-tune advertising campaigns based on ad design and performance data. Typically, advertising campaigns are managed by digital platforms (e.g., search engines, e-commerce sites, or item listing services), while the campaign design is handled by sellers or third-party design firms. As a result, performance data from advertising campaigns cannot be automatically or seamlessly utilized to refine advertisement design features. Advertising campaigns enable sellers to accurately identify and connect with their target audience (e.g., specific users or user groups). These campaigns include one or more advertisements aimed at the intended audience. However, even with a precisely defined target audience, the performance of the advertising campaign can be influenced by the design features of the advertisements. Notably, certain performance data (e.g., conversion rates) can vary significantly across different target audiences.

By way of example, an e-commerce platform running an advertising campaign for a seller (advertiser) advertising a new line of shoes. The ad targets two distinct groups: young adults aged 18-25 who are into fashion, and middle-aged adults aged 35-50 who prioritize comfort. Despite the ad being perfectly targeted to each group, the results can be very different. For the younger audience, the ad's sleek, trendy design with bold visuals and a strong emphasis on style might resonate well, leading to a high conversion rate. However, for the older group, the same ad might not perform as well. They may prefer a design that highlights comfort, durability, and functionality, resulting in a lower conversion rate for this group.

This discrepancy in performance illustrates a core challenge: fine-tuning ad designs during the campaign. While the e-commerce platform might gather conversion data, such as the number of clicks and purchases from each group, the process of adjusting the design based on this data is often fragmented. The e-commerce platform is responsible for managing the campaign, but the ad's design is typically created by the seller or a third-party agency. This division can make it difficult to quickly adapt the ad's design based on performance insights. If the conversion rate for the older group is low, for example, the platform's data is not always directly linked to the design team's ability to modify the ad in real time, slowing down the process of optimization. As a result, even with accurate targeting, the success of the campaign is still heavily influenced by how well the ad resonates with each user group's unique preferences, and how efficiently the design can be adapted based on performance data. As such, a more comprehensive item listing system - with an alternative basis for providing advertising management functionality- can improve computing operations and interfaces for advertising management.

### DESCRIPTION OF TECHNICAL SOLUTION

At a high level, an advertising campaign management engine enables a technical solution that is designed to optimize advertising campaigns by dynamically refining ad designs based on performance data and user preferences. By leveraging data analysis, machine learning, and generative modeling, the advertising campaign management engine enhances the effectiveness of ads in real time, functioning as an end-to-end solution that automates and streamlines the entire campaign optimization process.

Operationally, the advertising campaign management engine uses historical ad design-performance data to identify ad design patterns that drive user engagement and conversions, focusing on user preferences rather than traditional demographic segmentation. Through advanced methods such as clustering and feature analysis, the advertising campaign management engine defines distinct user groups and links their profiles to specific design elements, such as image styles, text layouts, and localization. In particular, an ad optimization model is generated based on modeling relationships between user groups, preference features, and preference linking. The ad optimization model enables the personalization of ad content to match the unique tastes and expectations of each audience segment.

To translate these insights into actionable outputs, the advertising campaign management engine processes Ad optimization profiles associated user profiles or user group profiles for advertising campaigns and a design requirement generator to generate structured design prompts in formats such as JSON. These outputs specify the necessary adjustments to ad elements, from image style and text positioning to other fine-tuned design requirements, tailored to resonate with distinct user groups.

Refinements are executed through generative models (e.g., design fine-tuning model and multi-modal generative models) that adjust both visual and textual ad components. Tools like image diffusion models ensure stylistic coherence, while layout generators provide precise placement of text and objects, seamlessly aligning updates with the specified preferences. This automation ensures that ad designs remain consistent, personalized, and effective. An updated advertising campaign is deployed.

A continuous feedback loop is an underlying feature of the advertising campaign management engine's operation, enabling iterative improvements. By collecting performance data such as clicks and conversions from deployed ads, the advertising campaign management engine identifies opportunities for optimization, refines designs accordingly, and redeploys updated content to maximize engagement and conversion rates.

In this way, the workflow involves defining user preferences through clustering and analysis, generating design requirements, refining ad content using generative models, deploying tailored ads, and iterating based on performance metrics. The advertising campaign management engine is built to scale, accommodating large datasets and diverse user groups in production environments. The advertising campaign management engine automates traditionally manual processes, adapts to new design features and shifting user preferences, and integrates seamlessly with e-commerce platforms and ad networks to utilize real-time performance data. With its ability to deliver highly personalized, efficient, and impactful advertisements, the advertising campaign management engine represents a transformative approach to campaign management, enhancing user engagement and driving higher conversion rates.

By way of example, an e-commerce platform can be employed to run a campaign to promote a new smartwatch. The advertiser (seller) aims to target three distinct user groups: young adults aged 18-30, middle-aged customers aged 35-50, and seniors aged 60 and above. Initially, three ad designs are created. Ad A features a sleek, modern design with bold imagery and minimal text to appeal to young adults. Ad B highlights the health benefits of the smartwatch, targeting middle-aged users who value fitness tracking. Ad C emphasizes simplicity and a large, easy-to-read display, designed for seniors.

As the campaign progresses, performance data reveals a disparity in engagement. Ad A achieves high conversion rates among young adults, but Ad C underperforms with seniors, who find the ad's layout overly complex. Ad B sees moderate success but could resonate better with its target group if it were tailored more effectively.

The advertising campaign management engine can be employed to optimize these ads dynamically. By using an ad optimization model that is generated based on analyzing performance metrics, clustering users based on their preferences for ad elements such as text style, imagery, and layout, the ad optimization model can be used along with design requirement generator to identify user preferences and fine-tune advertising campaigns. For example, seniors prefer brighter backgrounds and simplified text, while middle-aged users respond better to detailed health-related content positioned prominently.

Using this data, the advertising campaign management engine generates structured prompts for refinement. For example, the advertising campaign management engine outputs JSON files specifying changes like "increase text size," "use a light background," or "focus on fitness benefits in the tagline." These specifications are processed by multi-modal generative models. For Ad C, the advertising campaign management engine updates the layout, positioning key features more prominently and swapping out complex visuals for cleaner, brighter images. For Ad B, advertising campaign management engine adjusts the text style to make health benefits stand out more clearly.

The updated ads are deployed, and the cycle repeats. New performance data shows improved engagement from seniors, with Ad C now achieving a higher conversion rate. Similarly, Ad B resonates more strongly with middle-aged users after refinement. Meanwhile, Ad A remains highly effective, but subtle tweaks ensure it stays aligned with the evolving preferences of young adults.

This iterative process not only maximizes the effectiveness of each ad but also significantly reduces manual intervention. The advertising campaign management engine automates the generation and application of refinements, ensuring ads stay relevant and impactful throughout the campaign. The advertiser benefits from a streamlined, scalable solution, while users receive personalized, engaging content tailored to their preferences.

### EXAMPLE SYSTEM AND RESOURCES

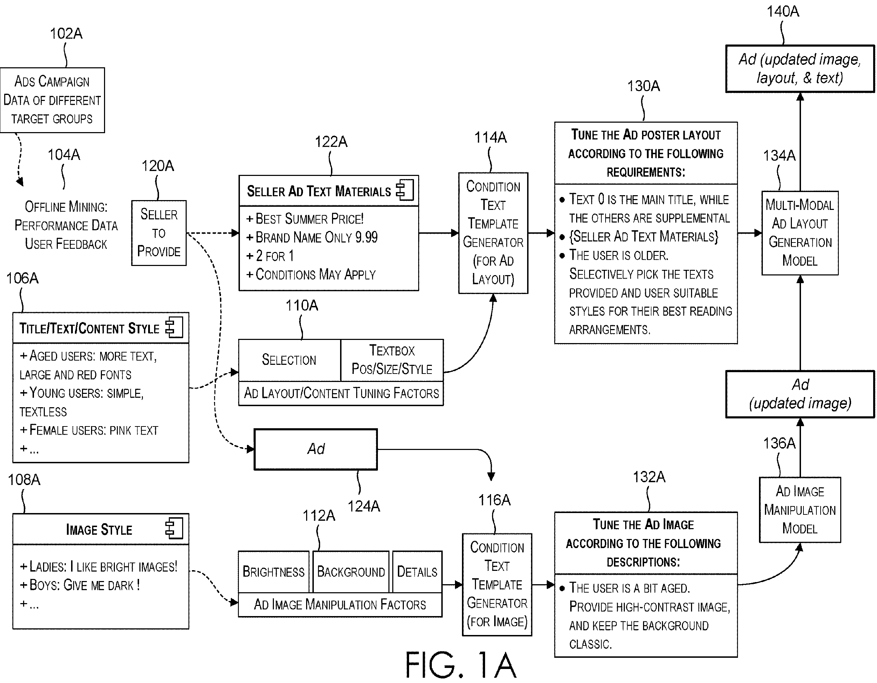

Aspects of the technical solution can be described by way of examples and with reference to FIGS. 1A - 1D. FIG. 1A illustrates an example workflow associated with providing advertising management functionality. By way of illustration, imagine an e-commerce platform, running an online advertising campaign for an advertiser to promote a new smartwatch. For this campaign, the advertiser targets different user groups based on factors like age, location, gender, and purchase history. The advertiser creates ad designs, each aimed at a specific user group. For instance, Ad A might feature a sleek, modern design targeting young adults aged 18-30, Ad B could highlight the health benefits of the smartwatch and appeal to middle-aged customers aged 35-50, and Ad C might emphasize the smartwatch's ease of use and large display, aimed at seniors aged 60+.

However, despite accurate targeting, the success of the ads depends on their design. Ad A, for example, might perform very well with young adults, generating a high conversion rate, while Ad C could fall short with seniors, as they may not find the large display feature as appealing, or they may prefer simpler designs. Similarly, Ad B might resonate with middle-aged customers but fail to engage younger audiences. The conversion rates, or the percentage of users who purchase the smartwatch after seeing the ad, vary significantly across groups due to these differences in preferences. For example, young adults might click on Ad A and make a purchase, while seniors might ignore Ad C, resulting in a low conversion rate for that group.

Despite knowing which user groups are being targeted, the advertiser faces a challenge in fine-tuning the ads during the campaign. The advertisement designers, typically third-party agencies, operate separately from the e-commerce platform. While the platform can gather valuable data on the performance of each ad-such as which group clicked on which ad and how many made a purchase-it's difficult to immediately refine the ad designs in response to this data. If Ad C isn't performing well with seniors, for instance, but is still the most appropriate ad for that group based on its features, the advertiser cannot easily adjust the ad's design to make it more appealing. This separation between campaign management and ad design often means it takes longer to make necessary changes, and by the time the adjustments are made, the campaign's overall success may have already been affected.

An advertising campaign management engine can be designed to leverage historical campaign performance data, particularly conversion metrics, to generate dynamic design fine-tuning requirements for specific user groups. These requirements are then used to automatically refine advertisements. The advertising campaign management engine supports an iterative process where updated designs are launched, performance data is collected, and further optimization is achieved.

The advertising campaign management engine operates based on three major components: high-conversion design modeling and mining; design requirement generation; and design fine-tuning models. Each component contributes to creating an end-to-end pipeline for dynamic ad refinement.

High-conversion design modeling and mining focuses on analyzing and modeling the design patterns that influence user engagement and conversion rates. The process involves three key steps: user group definition, preference feature mining, and preference linking. With user group definition, users are classified into distinct groups based on their preferences for advertisement features. Unlike traditional user segmentation for purchase behavior, this process targets preferences for ad design elements. Techniques such as clustering and feature importance estimation are employed to create actionable user profiles.

Preference feature mining includes identification and categorization of essential features. These features are empirically selected and validated to ensure they are editable by modern deep learning models. Features are divided into two main categories ad image manipulation factors (e.g., image style: quirky, classic; background: bright, light; resolution: high) and ad layout and content tuning factors (e.g., content selection: key text only, detailed text; text position/size/style: centralized slogan, light text color; and localization: language-specific options (e.g., Japanese, German))

Preference Linking includes linking user profiles with their corresponding design preferences. A combination of manual labeling and data-driven rule mining ensures personalized ad adjustments for each user group.

Design requirement generation can be generated based a user or user group associated with an advertising campaign. For example, when a user is identified, their profile and associated design preferences are processed by the design requirement generation. This component transforms the preferences into structured prompts suitable for fine-tuning models.

For example:
Input: User image and product details. Output: JSON-formatted design requirements for specific user groups:

```
      json
       [
        {
         "User Group": "Young Lady",
         "Design Style": {
           "Image": {
             "Style": "Quirky",
             "Background": "Light"
           },
           "Content": {
             "Content Selection": "Key text only",
             "Text Style": "Centralized slogan",
             "Language": "English"
           }
         }
        by
        {
         "User Group": "Otaku Boy",
         "Design Style": {
           "Image": {
             "Style": "Anime Art",
             "Background": "Anime Landscapes"
           },
           "Content": {
             "Content Selection": "Key text only",
             "Text Style": "Light text color",
             "Language": "Japanese"
           }
         }
        }
      ]
```

Design fine-tuning - via design fine-tuning models - is achieved using advanced multi-modal generative models. These models refine ad elements such as layouts, images, and text based on the generated requirements. Image refinement: using models like Sega Diffusion, ad images are adapted to meet stylistic preferences (e.g., quirky, bright). Content layout adjustment: Tools like PosterLLaVa generate ad layouts with precise placement of text and images.

For example:
Input: Ad image and layout preferences
Output: JSON-formatted layout elements for rendering:

   ```
       json
         [
          {"label": "title", "box": [0.2, 0.1, 0.8, 0.2]},
          {"label": "subtitle", "box": [0.3, 0.2, 0.7, 0.3]},
          {"label": "object", "box": [0.1, 0.4, 0.9, 0.8]}
        ]
```

Once fine-tuned, the updated advertisements are deployed and displayed to users in their tailored formats. Performance data is continuously collected for further refinement.

### Example: For a young lady user viewing an ad for a product:

Preferred image: Quirky, bright, minimalistic; Content: Centralized slogan, concise text. The refined advertisement integrates these preferences, maximizing user engagement and conversion rates.

The expected benefits expected benefits of this approach are significant. First, users would be presented with advertisements that are tailored to their stylistic preferences, making the ads feel more personalized and relevant. This level of customization could lead to more meaningful engagement with the content, as the ads would better align with the tastes and interests of individual users. Second, the ability to make design adjustments based on real-time performance data would improve conversion rates. By continually refining ad designs in response to how they perform with different user groups, the ads would become more effective at encouraging actions such as purchases or sign-ups. Third, the process of ad refinement would be automated, reducing the need for manual interventions from sellers or third-party agencies. This would streamline the campaign management process, allowing for quicker adjustments and minimizing delays. Finally, the advertising campaign management engine would be scalable, with extendable interfaces that can accommodate new design features and evolving user preferences. This flexibility would ensure that the platform could adapt to the growing demands of production-scale deployments, supporting the continuous evolution of the advertising strategies as user behavior and market conditions change.

As shown in FIG. 1A, the process begins with ad campaign data 102A (e.g., detailed ad design-performance data and user feedback). This data serves as the foundation for identifying patterns in ad effectiveness and user preferences.

Offline mining 104A indicates offline mining processes to extract actionable insights from ad campaign data. Two primary data streams are analyzed: mining ad design-performance data and mining user feedback data. Mining ad design-performance data involves correlating performance metrics (e.g., clicks, conversions) with ad design features such as layout, text, and style. Mining user feedback data examines explicit (e.g., surveys) and implicit (e.g., engagement metrics) feedback to understand user preferences.

Key mined elements include: Title, Text, Content, and Style 106A; Examples of insights generated: Aged users prefer more detailed text, large fonts, and red-colored elements; Younger users engage better with minimalist, text-free ads; and Female users are drawn to ads with pink-themed text. Image Style 108A: Examples of stylistic preferences: Female audiences prefer bright, vibrant images; Male audiences, particularly younger ones, favor darker, moody visuals. The mined data is used to train an ad optimization model. This model identifies: ad layout and content tuning factors 110A: factors that influence how textual and visual elements should be arranged, and ad image manipulation factors 112A: stylistic adjustments to image features.

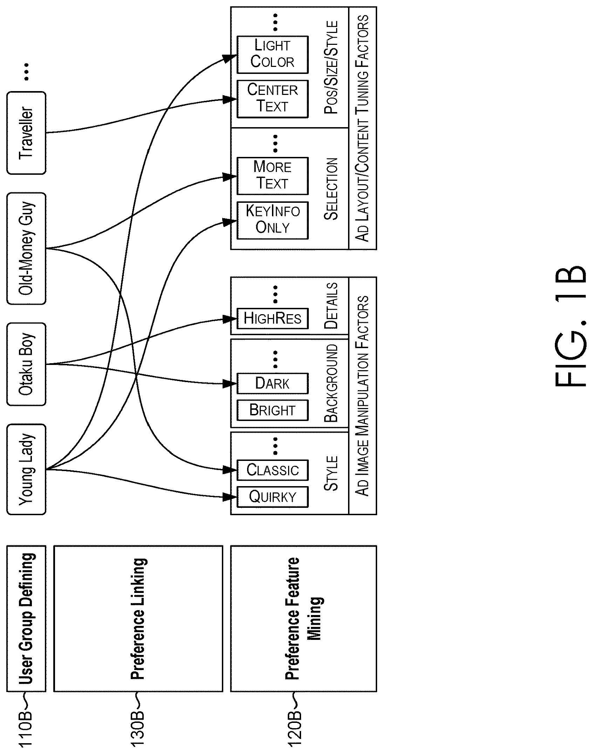

With reference to FIG. 1B, FIG 1B illustrates an alternative embodiment of high-conversion-design modeling and mining. The typical design patterns or features that can be modeled or edited by recent deep learning models, along with user preferences for these editable design patterns, need to be identified. This can be achieved through offline data mining, which is broken down into three main steps. First, user group defining 110B, users need to be classified into different groups, with each group representing a clear intention or preference towards advertisement features. This process is like conventional user portrait mining for advertisements, although the target is slightly different. Conventional user portrait mining focuses on grouping users based on their purchase preferences, while this work focuses on users' preferences in advertising material designs. Techniques, such as user clustering or feature importance estimation, are commonly used to accomplish this.

Second, preference feature mining 120B, the features of an advertisement need to be identified, as these features must be editable by AI models. Instead of relying on a data-driven approach, these features are manually classified through empirical methods and then validated for their importance online. Since advertisements are primarily composed of images of the selling item and text descriptions, preference features are categorized into two main types: ad image manipulation factors and ad layout and content tuning factors. In the advertising campaign management engine, ad image manipulation factors include things like image style (quirky or classic images), background specifications (bright or light backgrounds), and image details (such as high resolution). As for ad layout and content tuning factors, these include content selection (key text only or as much ad text as possible), text position/size/style (centralized slogans or light text color), and language/country (such as Japan, Germany, or Italy). The advertising campaign management engine supports these preference features, with the ability to extend its functionality by providing interfaces for adding new features, allowing for continuous upgrades to meet production requirements.

Finally, preference linking 130B, the outputs from the user group definition and preference feature mining steps can linked so that when a user arrives, their profile can be matched with preference features, allowing for automatic personalized advertisement tweaking. This linking process is carried out through a combination of manual labeling and data-driven rule mining. In this way, preference linking within the advertising campaign management engine is the process of connecting user profiles or group characteristics, identified through user group definition, with specific design preferences extracted through preference feature mining. This connection enables automated and personalized advertisement adjustments, ensuring that ads resonate with the target audience's preferences to enhance engagement and conversion rates. The process relies on a combination of data-driven rule mining and manual labeling to maintain both accuracy and flexibility.

User profiles are created for distinct groups based on demographic data, behavioral patterns, and inferred preferences. For instance, young professionals may be categorized as favoring sleek, minimalist designs, while seniors might prefer ads with larger fonts and brighter backgrounds. At the same time, design preferences are categorized into features such as text style, image brightness, and layout structure. Some users may prefer bold fonts and centrally positioned text, whereas others might respond better to soft color palettes and off-center designs.

Preference linking then associates these user profiles or groups with relevant design features. Data-driven rule mining analyzes historical data to identify correlations between user attributes and ad performance metrics. For example, patterns in the data might show that middle-aged professionals engage more with ads featuring dark blue headings and detailed descriptions. When data-driven methods fall short, manual labeling ensures that unique or complex preferences are accurately captured and linked to user profiles.

In an advertising campaign for fitness trackers, the advertising campaign management engine might define three user groups: young professionals aged 25-35 who are tech-savvy and time-conscious, middle-aged fitness enthusiasts aged 40-55 who focus on health and wellness, and seniors aged 65 and older who prioritize ease of use and large displays. Design preferences for these groups might reveal that young professionals favor bold imagery and minimalist text, middle-aged enthusiasts prefer ads that balance health information with visuals, and seniors respond best to simple layouts, large fonts, and high-contrast visuals.

Through preference linking, these groups are connected to specific design features. For young professionals, ads might feature central product imagery, concise taglines, and a modern color palette, such as black and metallic tones. For middle-aged fitness enthusiasts, ads could use a two-column layout with detailed health information on one side and product visuals on the other. For seniors, ads might include high-contrast backgrounds, large sans-serif fonts, and a simplified single-column layout.

This linking process enables the system to automatically adjust ad designs based on the identified profiles. A fitness tracker ad tailored for seniors could feature large, easy-to-read text like "Stay Active at Any Age," complemented by a bright background and a straightforward call-to-action. In contrast, an ad for young professionals might emphasize the tagline "Track Your Peak Performance" in bold text overlaying a minimalist product image.

By automating this process, preference linking ensures real-time personalization of advertisements, significantly enhancing their relevance and effectiveness across diverse user groups. This capability not only improves engagement but also supports higher conversion rates by aligning ads with the specific needs and preferences of their intended audience.

Turning to FIG. 1A, condition text template generators (114A and 116A) are provided. Using insights from the ad optimization model, the advertising campaign management engine develops condition-based text templates for the following: ad layout and content tuning, which involves tailoring poster layouts such as positioning titles, subtitles, and objects, and ad image tuning which refines the stylistic elements of images to meet user preferences.

Ad campaign deployment involves the advertiser (seller, 120A) providing an initial campaign that includes: ad text 122A, which consists of content for titles, slogans, or descriptions, and Ad images (124A), which include visual elements such as product photos or graphics.

The condition text template generator 114A enables applying layout-specific refinements to adjust ad poster layouts 130A, aligning text elements to maximize engagement. Similarly, the condition text template generator 116A enables fine-tuning ad images 132A, ensuring visual coherence with the identified preferences.

In the ad refinement and generation stage, the refined text and image components are integrated to produce updated ads 140A. This process employs two advanced generative models: Multi-modal ad layout generation model 134A: This model generates cohesive layouts by harmonizing textual and visual placements. Ad image manipulation model 136A: This model applies stylistic adjustments to images, such as brightness, color balance, or thematic effects.

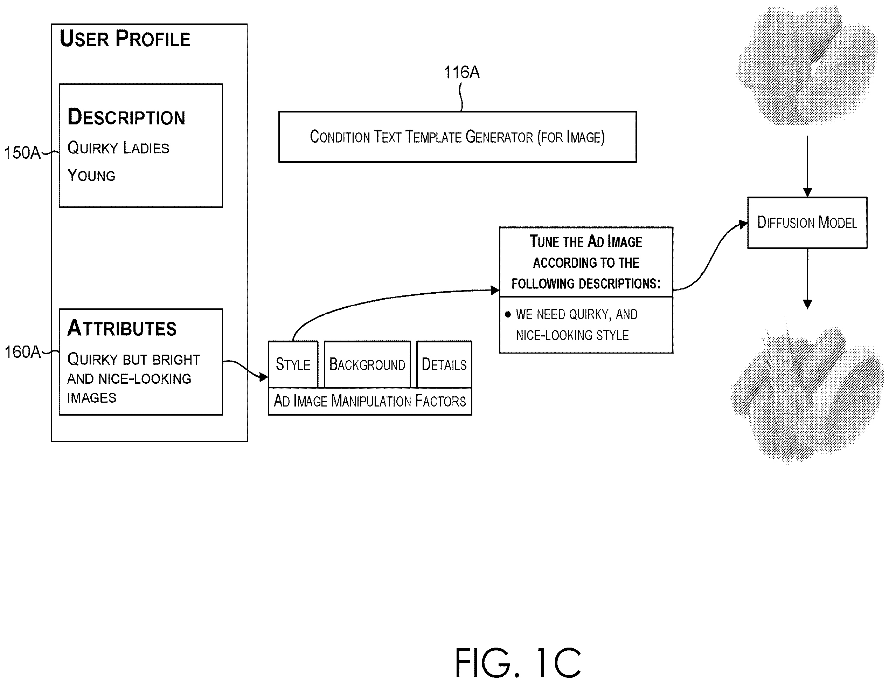

As illustrated in FIG. 1C, a user profile including description 150A and attributes 160A such as demographic information, behavioral data, and aesthetic preferences, is utilized by the condition text template generator 116A to fine-tune an ad image. This tuning process adapts the visual elements of the ad, such as color schemes, image styles, and spatial composition, to align with the preferences and expectations indicated by the user profile. For example, if the user profile specifies a preference for vibrant, high-contrast imagery and minimalist design, the condition text template generator 116A will adjust the ad image to reflect these qualities by enhancing brightness, sharpening key visual elements, and removing unnecessary background clutter.

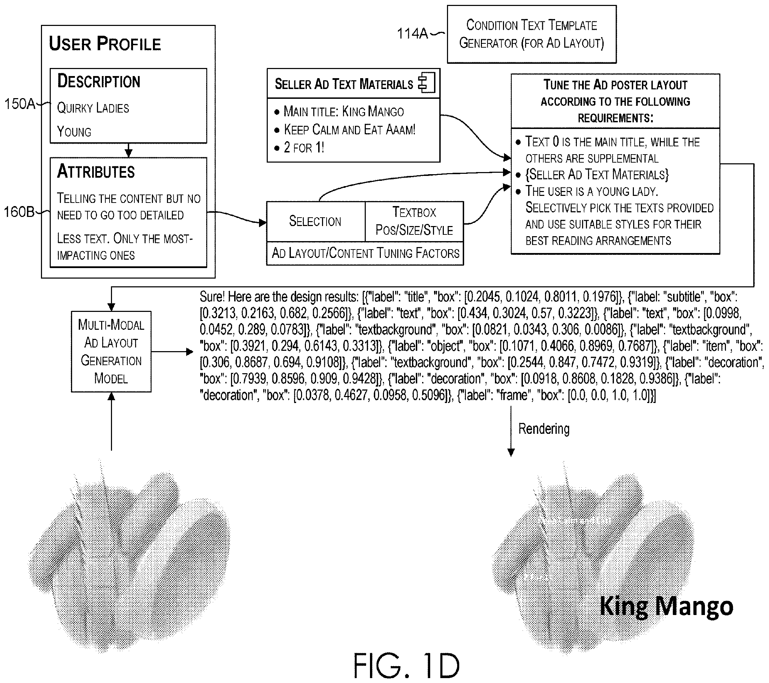

Similarly, as shown in FIG. 1D, the same user profile including description 150A and attributes 160A are further leveraged by the condition text template generator 114A in conjunction with advanced generative models to create an updated ad. The integration of this profile allows for a holistic approach to ad refinement, wherein both textual and visual elements are dynamically aligned to the user's preferences. The condition text template generator 114A produces structured prompts that guide the advanced generative models to synthesize and layout ad content effectively. For instance, if the user profile indicates a preference for concise, centrally positioned slogans with accompanying visual cues, the generator will ensure the text placement and font styles emphasize clarity and impact, while the generative models refine the ad's overall layout and aesthetic coherence.

These iterative adjustments, driven by user-centric data and executed by advanced computational tools, result in a highly personalized and visually appealing advertisement designed to maximize user engagement and conversion rates.

The final output is an optimized ad tailored to the preferences of specific user groups, ensuring higher engagement and conversion rates. For example, a refined ad for an older audience might feature a red title with large fonts, detailed descriptions, and a bright background. Conversely, a youth-oriented ad may emphasize a simple design with minimal text and a darker, trendier image.

This iterative cycle of ad design optimization, deployment, and feedback ensures that the advertising campaign management engine remains dynamic and responsive to changing user behaviors and preferences. The advertising campaign management engine's scalability and adaptability allow for seamless integration with large-scale advertising platforms, enabling continuous improvement in ad campaign performance.

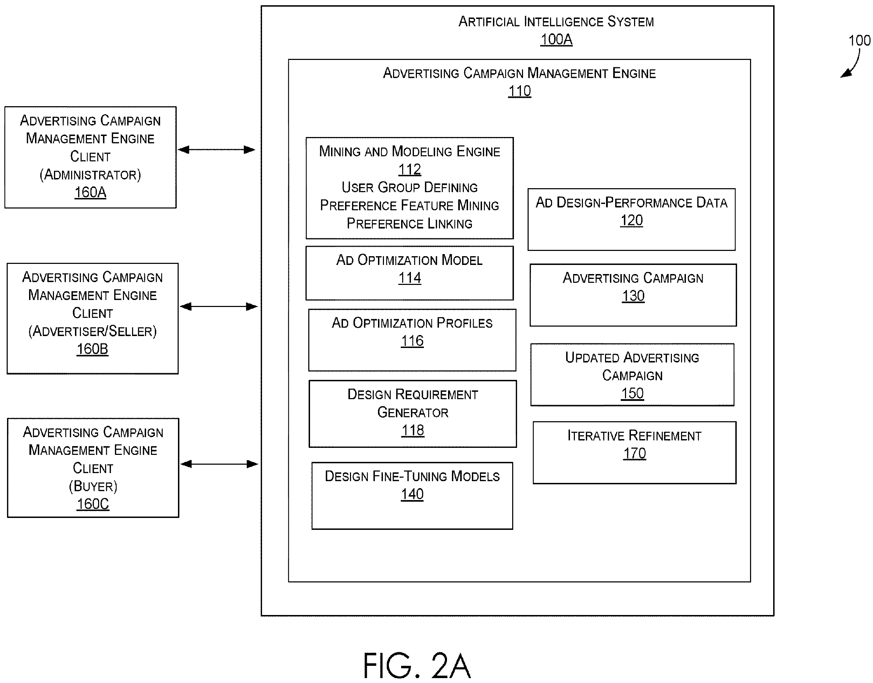

With reference to FIG. 2A, FIG. 2A illustrates item listing system 100 including artificial intelligence system 100A, advertising campaign management engine 110, mining and modeling engine 112, ad optimization model 114, ad optimization profile, design requirement generator 118, ad design-performance data 120, advertising campaign 130, design fine-tuning models 140, updated advertising campaign 150, advertising campaign management engine client 160A (administrator), advertising campaign management engine client 160B (seller), advertising campaign management engine client 160C (buyer), and iterative refinement 170.

Artificial intelligence system 100A establishes a dynamic framework for optimizing advertising campaigns by iteratively refining advertisements to align with user preferences and behaviors. At its core, advertising campaign management engine 110 coordinates an integrated pipeline for mining data, optimizing ad designs, and generating fine-tuned advertisements.

The mining and modeling engine 112 enables the initial step, extracting actionable insights through three core activities: user group defining, preference mining, and preference linking. User group defining categorizes audiences based on attributes such as demographics, behavior patterns, and aesthetic preferences. For example, users may be segmented into groups such as young professionals who prefer minimalist layouts or families who are drawn to vibrant and colorful designs. Preference mining identifies design features that resonate with these groups, such as font sizes, color palettes, and image styles. For instance, older users may favor large, clear fonts with detailed text, while younger audiences prefer sleek, text-free designs. Preference linking combines these mined insights with user profiles to establish personalized ad design strategies, such as associating tech-savvy users with bold, high-contrast visuals that emphasize innovation.

Insights derived from the mining and modeling process inform the ad optimization model 114, which generates tailored ad optimization profiles 116 for user groups or individuals. ad optimization profiles 116 function are associated with user descriptions and user attributes that can be used to generate blueprints that specify design adjustments needed to enhance engagement and conversion. For example, an ad optimization profile can include a condition text template that specifies that eco-conscious users might emphasize earthy tones, imagery reflecting sustainability, and concise text promoting environmental benefits.

Design requirement generator 118 translates these ad optimization profiles 116 into structured specifications for ad components. These specifications might include instructions to adjust font size, reposition textual elements, or alter the visual tone of an image. For instance, a campaign targeting minimalism might specify a clean layout with a central focus on a product image, minimal text, and ample white space. The specifications are informed by a combination of historical Ad design-performance data 120 and real-time campaign analytics, ensuring relevance and accuracy.

Advertising campaign 130 corresponds to advertising campaigns provided by an advertisers. Advertising campaign 130 includes raw text and visual elements that serve as the foundation for refinement. Design fine-tuning models 140 implement the design requirements to generate improved ads. Using advanced generative models, the fine-tuning process may involve enhancing font clarity, adjusting image brightness, or repositioning layout elements to maximize visibility and user engagement. The refined output result in an updated advertising campaign 150, which is deployed to targeted audiences. This updated campaign 150 adheres to the optimization profiles and design specifications to meet specific user preferences. For instance, a campaign designed for seniors may include larger text with a bright background, while a campaign for young adults emphasizes sleek imagery with concise, modern text placement.

Iterative refinement 170 supports a feedback-driven process that continuously improves ad designs. Once an updated campaign is deployed, performance metrics-such as click-through rates, conversion rates, and engagement duration-are collected and analyzed. These metrics inform the mining and modeling engine, enabling refinements for subsequent iterations. For example, if an ad underperforms due to overly complex visuals, the advertising campaign management engine 110 simplifies the design in the next iteration while retaining core messaging elements.

Advertising campaign management engine 110 operates with advertising campaign management engine clients, such as administrators (advertising campaign management client 160A), who monitor system operations and metrics; sellers (advertising campaign management client 160B), who supply the initial ad content and track campaign success; and buyers (advertising campaign management client 160C), whose interactions and feedback provide performance data for further refinements. These stakeholders collaborate within the ecosystem to achieve optimized advertising outcomes.

The integration of advanced AI, machine learning, and iterative adjustments ensures that each advertising campaign is progressively optimized for better engagement and conversion. Advertising campaign management engine 100 provides advertisers with a scalable, adaptable solution capable of meeting diverse user needs while delivering measurable results, ultimately transforming the landscape of dynamic advertising.

By way of illustration, advertising campaign management engine 110 is designed to utilize historical campaign performance data (i.e., ad design-performance data 120), particularly conversion metrics, to generate dynamic design refinements for specific user groups. These refinements are used to automatically adjust advertisements, with the advertising campaign management engine 110 supporting an iterative process that continuously collects performance data, optimizes the designs, and deploys updated content to enhance user engagement and conversion rates.

Advertising campaign management engine 110 operates through a series of interrelated components, which work together to create an end-to-end pipeline for dynamically refining advertisements. The first key component (i.e., mining and modeling engine 112) focuses on analyzing design patterns that influence user engagement and conversions. This process begins by defining user groups based on their preferences for advertisement features, as opposed to traditional demographic segmentation, which typically focuses on purchase behavior. Advanced techniques such as clustering and feature importance estimation are employed to develop actionable user profiles, highlighting the features of ads that resonate with specific groups.

The next step in this process is preference feature mining, which involves identifying and categorizing the design elements that have the most impact on user engagement. These features are validated and selected based on their ability to be adjusted by modern deep learning models. The features are divided into categories such as ad image manipulation (e.g., style, background, resolution) and content tuning (e.g., text style, positioning, and language preferences). The final step in this phase is preference linking, where user profiles are connected with the design features that best match their preferences. This is achieved through a combination of manual labeling and data-driven rule mining, ensuring that ads are adjusted to meet the specific needs of each user group.

The second major component of the advertising campaign management engine 110 is design requirement generation (e.g., design requirement generator 118), which processes user profiles and design preferences to create structured design prompts. These prompts specify the necessary adjustments to various ad components, including image style, text positioning, and localization, and are used by the advertising campaign management engine 110 design fine-tuning models. The generated prompts provide the input for the next phase of the process, which focuses on fine-tuning the ad designs.

Design fine-tuning is carried out using advanced generative models (e.g., design fine-tuning models 140) that adjust both the visual and textual elements of an ad. Multi-modal models, such as image diffusion models, adapt images to align with stylistic preferences, while layout generators precisely place text and other elements within the ad to meet design requirements. The result is a refined ad design that aligns with the specific preferences of the target user group. Once the ad designs are fine-tuned, they are deployed, and performance data, including user interactions and conversion rates, is collected to guide further optimizations.

The continuous feedback loop (i.e., iterative refinement 170) ensures that ads are constantly improving based on real-time performance metrics. Ads can be regularly updated and re-deployed to maximize engagement, with each iteration becoming more effective at achieving the desired outcomes. The process of refining ads through this engine allows for significant customization, ensuring that ads are more relevant and personalized for users, which in turn drives higher engagement and conversion rates.

For clarity and efficient reference, a glossary of key terms and concepts pertinent to the technical solution is provided below.

Advertising campaign management engine 110 also offers scalability, with the ability to accommodate large datasets and evolving user preferences. The automation of the design refinement process reduces the need for manual intervention, streamlining the campaign management workflow and allowing for quicker, more responsive adjustments. Furthermore, the advertising campaign management engine 110 is adaptable, supporting new design features and user preferences as they emerge, ensuring that it remains effective in changing market conditions. This scalability and flexibility make the advertising campaign management engine well-suited for production-scale deployments, where rapid iteration and continuous optimization are essential for successful advertising strategies.

Ad design-performance data 120 refers to the historical data collected from advertising campaigns, encompassing performance metrics such as click-through rates and conversion rates, as well as user feedback obtained through explicit surveys or implicit engagement behaviors. This data forms the foundation for modeling the relationships between user groups, preference features, and linking mechanisms, which are essential for optimizing ad design and targeting.

User group defining is the process of segmenting users into distinct categories based on attributes such as demographics, behavioral patterns, and inferred preferences. This segmentation identifies meaningful groupings that share common characteristics, such as a preference for minimalist designs or detailed text.

Preference features (or factors) are the editable design characteristics of advertisements, which are categorized into ad image manipulation factors and ad layout and content tuning factors. Image manipulation factors include properties such as style, brightness, and resolution, while content tuning factors cover text positioning, font size, and language localization. These features form the basis for generating condition text templates and are integral to fine-tuning ad designs to match user preferences.

Preference linking is a hybrid framework that connects user profiles to preference features. This process combines data-driven rule mining or machine learning techniques, ensuring accurate and personalized ad adjustments for individual users or groups.

The ad optimization model 114 is a predictive framework created using insights derived from ad design-performance data. Ad optimization model 114 maps relationships between user groups, their preferences, and how these preferences link to specific design elements. Ad optimization model 114 generates condition text templates and optimization profiles, enabling the customization of ad layouts, content, and image factors to suit targeted campaigns effectively.

An ad optimization profile (e.g., ad optimization profiles 116) represents a structured set of data that can be used to specify the necessary refinements for ad design, including layout adjustments, content tuning, and image manipulations, to align with the needs and expectations of the target audience. Ad optimization profile are associated with user descriptions and user attributes of a particular user or user group.

Condition text templates are structured representations of design requirements generated by the ad optimization model. These templates specify layout and content tuning factors as well as image manipulation factors, providing clear directions for refining ad layouts and visuals to better align with user preferences.

The design requirement generator 118, often implemented as a Large Language Model (LLM), creates fine-tuning prompts based on the ad optimization profiles and campaign specifications. By employing multi-modal layout fine-tuning templates, the generator produces structured prompts tailored for use by the design fine-tuning models.

Design fine-tuning models 140 are generative AI models or multi-modal layout generators that adjust ad layouts and visuals according to the fine-tuning prompts. These models refine ad elements to create cohesive, visually appealing designs that align with the preferences of the target audience. A multi-modal layout generator specifically can automatically creates designs by combining and organizing different types of content, such as text and images, into a cohesive layout. It uses algorithms or AI models to understand and arrange these elements in a way that enhances visual appeal and usability, often based on context and predefined design principles.

A multi-modal layout generator can be associated with a multi-modal layout fine-tuning prompt template that is a structured input designed to guide the fine-tuning of a model for generating or optimizing layouts that integrate various types of content (e.g., text and images). It typically includes instructions for how to organize and position the different modalities, taking into account factors (i.e., ad image manipulation factors and ad layout and content tuning factors). An LLM can employ multi-modal layout fine-tuning prompt template associated with ad optimization profiles to generate fine-tuning prompts for design fine-tuning models.

The advertising campaign management engine 110 integrates the ad optimization model 114, design requirement generator 118, and design fine-tuning models 140. Advertising campaign management engine 110 manages real-time performance metrics, design optimization, and automated adjustments to support iterative refinement cycles, ensuring continuous improvement of ad campaigns.

Accessing historical ad design-performance data 120 involves retrieving and analyzing metrics and feedback from previous campaigns to identify patterns, user preferences, and factors that drive success. Historical ad design-performance data 120 is used to generate the ad optimization model, which maps relationships between user groups, preferences, and linking mechanisms, producing condition text templates to guide layout and image adjustments.

Advertisers provide raw campaign materials, such as text and images, which are then processed through the optimization pipeline. Advertising campaign management engine 110 generates ad optimization profiles that can be employed to link user attributes to specific refinement requirements, such as preferred font sizes or image brightness. These ad optimization profiles can be used to generate condition text templates that inform the design requirement generator, which translates the condition text templates that into structured fine-tuning prompts.

The design fine-tuning models 140 use these prompts to adjust ad elements, refining text placement, color schemes, and visuals. The result is a tailored advertising campaign designed to resonate with specific user preferences. Once deployed, these refined campaigns integrate user preferences into the design, maximizing engagement.

Performance metrics from the deployed ads feed back into the ad optimization model, enabling the generation of subsequent optimization profiles and updated ads. This iterative refinement and feedback loop ensures that each cycle improves engagement and conversion rates, continuously enhancing the effectiveness of the advertising campaigns.

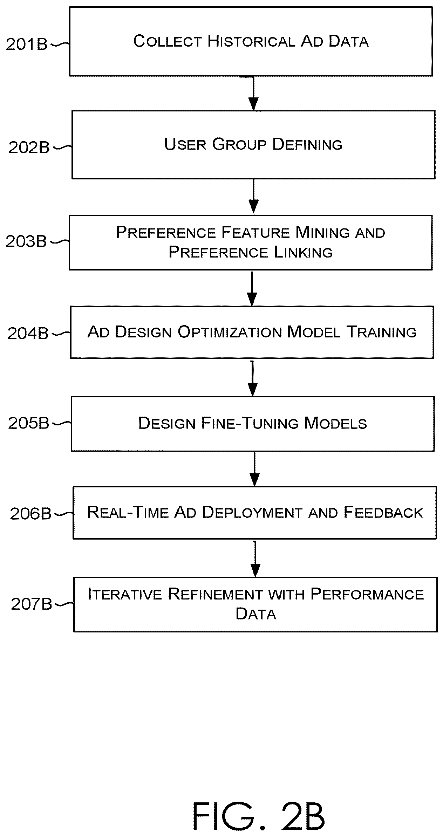

With reference to FIG. 2B, FIG. 2B, illustrates a schematic 200B associated with providing an advertising campaign management engine in accordance with embodiments described herein. The technical solution of the advertising campaign management engine can be explained by way of steps and an example advertising campaign.

Step 201B: Collect Historical Ad Data - The process begins by gathering historical data from previous ad campaigns to understand performance trends. This includes images used in the campaigns, such as a sleek photo of a tech product with a minimalist design, and the layout of text, such as bold fonts centered around a call-to-action like "Buy Now!" Metrics such as click-through rates (CTR) and conversion percentages are also captured; for instance, a specific ad might have had a CTR of 15% and a conversion rate of 8%. For example, an advertisement targeted at "Young Professionals" achieved a CTR of 20% by utilizing simple, text-light designs, indicating a preference for minimalism in this segment.

Step 202B: User Group Defining - Next, users are segmented into distinct clusters based on demographic and behavioral data. These clusters might include groups like "Tech Enthusiasts," "Eco-Conscious Shoppers," and "Luxury Seekers." Each cluster reflects unique preferences. For instance, "Eco-Conscious Shoppers" tend to favor visuals with green tones and messaging that emphasizes sustainability, such as "Eco-friendly. Planet-first." This segmentation ensures that ads can be tailored to resonate with the specific preferences of each group.

Step 203B: Preference Feature Mining and Preference Linking - Once user segments are defined, key features of successful advertisements are extracted and analyzed to determine their impact on performance. This includes visual elements like whether images are minimalist, monochrome, or vibrant, as well as textual components such as font size, content length, and placement. For example, "Tech Enthusiasts" have shown higher engagement rates with ads that feature bold, center-aligned fonts and minimalist product images. Identifying these preferences allows the system to fine-tune ad elements for better alignment with user expectations.

Step 204B: Ad Design Optimization Model Training - The advertising campaign management engine then trains AI models to link user preferences to high-performing ad features. Convolutional Neural Networks (CNNs) can be used to analyze image preferences, while transformers handle text optimization. For example, the model might predict that an ad targeting "Luxury Seekers" will achieve a CTR of 25% if it incorporates high-resolution images of luxury items, gold-themed fonts, and a clean, minimalist layout. These predictions guide the design of ads to maximize engagement.

Step 205B: Design Fine-Tuning - With the ad design optimization model in place, the advertising campaign management engine can update ads based on ad optimization profiles, ad optimization model, and design fine-tuning models. It is contemplated that in some embodiments ads may be dynamically updated in real time when users engage with the platform. For instance, a user identified as a "Tech Enthusiast" might be shown a sleek, black-and-white ad with bold text emphasizing innovation. Meanwhile, an "Eco-Conscious Shopper" might encounter an ad with green hues and messaging about sustainability. This real-time adjustment ensures that the content resonates immediately with the viewer, increasing the likelihood of interaction.

Step 206B: User Interaction and Feedback - After deploying the optimized and/or personalized ads, the advertising campaign management engine tracks user interactions, including metrics like CTR, conversions, and the amount of time spent engaging with the ad. For instance, a newly designed ad targeting "Young Professionals" might achieve a CTR of 30%, signaling that the adjustments were successful. This feedback loop provides valuable data for evaluating the effectiveness of different ad elements.

Step 207B: Iterative Refinement with Performance Data - Finally, the advertising campaign management engine periodically updates its AI models with the latest data to ensure continued accuracy and relevance. For example, new data might reveal that "Tech Enthusiasts" have developed a preference for dark-mode-themed ads, prompting the system to adjust its recommendations. By retraining the models with fresh insights, the advertising campaign management engine remains adaptive to evolving user preferences and market trends.

By way of example, historical data analysis reveals that younger users are more likely to engage with minimalist ad designs featuring bold imagery. This insight is used to inform the creation of condition text templates that prioritize reducing text and enhancing the prominence of visual elements in future campaigns. By aligning with these preferences, the advertising campaign management engine ensures that ad designs resonate effectively with this demographic.

The process of ad optimization profile creation links specific user groups to their unique preferences. For instance, middle-aged professionals are identified as favoring detailed text and subdued color schemes. An ad optimization profile is generated for this user group, the ad optimization profile can be used to design adjustments such as a centered headline in dark blue with supporting text positioned below, ensuring clarity and alignment with their expectations.

Using these ad optimization profiles, the design requirement generator creates structured prompts to guide the refinement process. In an eco-conscious campaign, the design requirement generator produces a fine-tuning prompt that instructs the design fine-tuning model to incorporate natural elements into the imagery and apply green tones in the text layout. These prompts ensure that the resulting ads communicate effectively with the intended audience.

The fine-tuning process itself leverages advanced generative models to refine ad elements. For example, an ad for a smartwatch undergoes adjustments to its imagery, with increased brightness and sharper contrast applied to highlight key product features. Simultaneously, the accompanying text is repositioned to the top right, improving readability and drawing attention to critical details.

When a deployed campaign underperforms, the advertising campaign management engine engages in iterative improvement. In a scenario targeting seniors, an ad with overly complex visuals and small font sizes is redesigned. The layout is simplified, font sizes are enlarged, and the background is changed to a lighter shade. These adjustments lead to increased engagement, demonstrating the system's ability to adapt dynamically to feedback. By combining advanced analytics, machine learning, and generative design tools, this technical solution automates ad refinement, ensuring that advertising remains scalable, adaptable, and tailored to user needs. Each iteration delivers more personalized and effective campaigns, enhancing engagement and achieving measurable results.

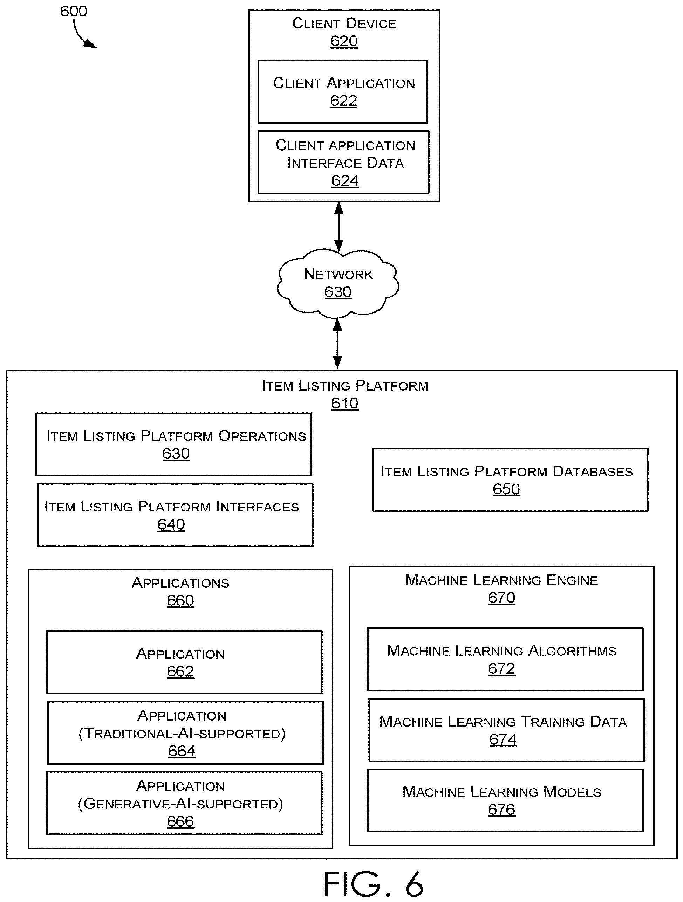

Aspects of the technical solution can be described by way of examples and with reference to FIGS. 1A - 1D, 2A, and 2B. FIG. 2A is a block diagram of an exemplary technical solution environment, based on example environments described with reference to FIGS. 6, 7, and 8 for use in implementing embodiments of the technical solution are shown. Generally the technical solution environment includes a technical solution system suitable for providing the example item listing system 600 in which methods of the present disclosure may be employed. In particular, FIG 2A shows a high level architecture of the item listing system 100 in accordance with implementations of the present disclosure. Among other engines, managers, generators, selectors, or components not shown (collectively referred to herein as "components"), the item list system 100 of FIG. 2A support functionality described in FIGS. 1A - 1D.

### Example Methods

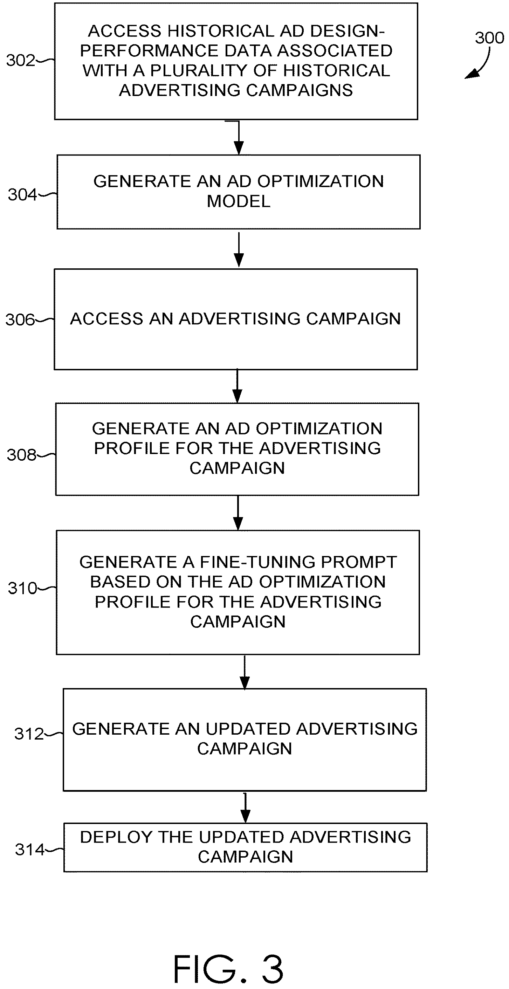

With reference to FIGS. 3, 4, and 5 flow diagrams that illustrate methods for providing an advertising campaign management engine in an artificial intelligence system. The methods may be performed using the artificial intelligence system described herein. In embodiments, one or more computer-storage media having computer-executable or computer-useable instructions embodied thereon that, when executed, by one or more processors can cause the one or more processors to perform the methods (e.g., computer implemented method) in an artificial intelligence system (e.g., computerized system or computer system).

Turning to FIG. 3, a flow diagram is provided that illustrates a method 300 for providing an advertising campaign management engine in an artificial intelligence system. At block 302, access historical ad design-performance data associated with a plurality of historical advertising campaigns. At block 304, generate an ad optimization model. At block 306, access an advertising campaign. At block 308, generate an ad optimization profile for the advertising campaign. At block 310, generate a fine-tuning prompt based on the ad optimization profile for the advertising campaign. At block 312, generate an updated advertising campaign. At block 314, deploy the updated advertising campaign.

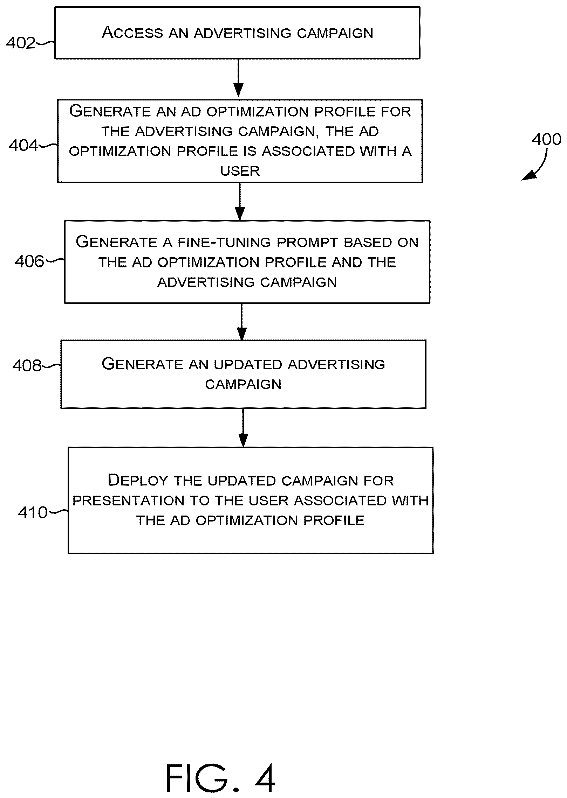

Turning to FIG. 4, a flow diagram is provided that illustrates a method 400 for providing an advertising campaign management engine in an artificial intelligence system. At block 402, access an advertising campaign. At block 404, generate an ad optimization profile for the advertising campaign, the ad optimization profile is associated with a user. At block 406, generate a fine-tuning prompt based on the ad optimization profile and the advertising campaign. At block 408, generate an updated campaign. At block 410, deploy the updated campaign for presentation to the user associated with the ad optimization profile.

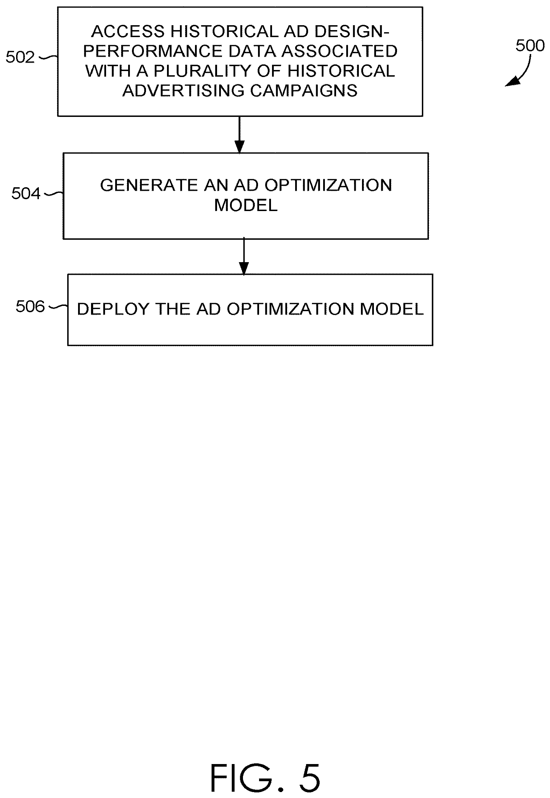

Turning to FIG. 5, a flow diagram is provided that illustrates a method 500 for providing an advertising campaign management engine in an artificial intelligence system. At block 502, access historical ad design-performance data associated with a plurality of historical advertising campaigns. The historical ad design-performance data comprises ad performance metrics and user feedback data. At block 504, generate an ad optimization model. Generating the ad optimization model is based on offline operations comprising data analytics for user segmentation and preference insights associated with the ad design-performance data. At block 506, deploy the ad optimization model.

### Technical Improvement

Embodiments of the present invention have been described with reference to several inventive features (e.g., operations, systems, engines, and components) associated with an item listing system. Inventive features described include: operations, interfaces, data structures, and arrangements of computing resources associated with providing the functionality described herein relative with reference to an advertising campaign management engine associated with an artificial intelligence system.

Embodiments of the present invention relate to the field of computing, and more particularly to an artificial intelligence system. The following described exemplary embodiments provide a system, method, and program product to, among other things, execute generative AI security engine operations that provide advertising campaign management. Therefore, the present embodiments improve the technical field of artificial intelligence technology and item listing platform technology enhancing the efficiency and effectiveness of advertising management through advanced data-driven techniques and automation. For example, by leveraging AI to analyze historical ad design-performance data, user preferences, and feedback, the embodiments enable dynamic and precise optimization of advertisements tailored to specific user groups or individuals. This integration of AI into the advertising campaign management process reduces computational redundancy by automating iterative adjustments, eliminating the need for repetitive manual refinements. Additionally, the use of advanced generative models and structured prompts ensures that ad layouts and designs are consistently aligned with user preferences in real time, significantly improving engagement rates and conversion outcomes.

On item listing platforms, the embodiments enhance the relevancy of ads displayed to users, leading to a better overall user experience. This personalization increases the likelihood of conversions, directly benefiting advertisers while optimizing platform resource usage by prioritizing high-performing ad placements. The combination of scalability, adaptability, and real-time optimization positions the embodiments as a significant advancement in both artificial intelligence and item listing platform technologies.

Functionality of the embodiments of the present invention have further been described, by way of an implementation and anecdotal examples - to demonstrate that the operations for providing advertising campaign management using an advertising campaign management engine in an artificial intelligence system as a solution to a specific problem in artificial intelligence technology to improve computing operations in artificial intelligence systems. Overall, these improvements result in less CPU computation, smaller memory requirements, and increased flexibility in artificial intelligence systems when compared to previous conventional artificial intelligence system operations performed for similar functionality. ADDITIONAL SUPPORT FOR DETAILED DESCRIPTION OF THE INVENTION

### Example Item Listing System Environment

Referring now to FIG. 6, FIG. 6 illustrates an example item listing system 600 computing environment in which implementations of the present disclosure may be employed. In particular, FIG. 6 shows a high level architecture of an example item listing platform 610 that can host a technical solution environment, or a portion thereof. It should be understood that this and other arrangements described herein are set forth as examples. For example, as described above, many elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

The item listing system 600 can be a cloud computing environment that provides computing resources for functionality associated with the item listing platform 610. For example, the item listing system 600 supports delivery of computing components and services - including servers, storage, databases, networking, applications, and machine learning associated with the item listing platform 610 and client device 620. A plurality of client devices (e.g., client device 620) include hardware or software that access resources on the item listing system 600. Client device 620 can include an application (e.g., client application 622) and interface data (e.g., client application interface data 624) that support client-side functionality associated with the item listing system. The plurality of client devices can access computing components of the item listing system 600 via a network (e.g., network 630) to perform computing operations.

The item listing platform 610 is responsible for providing a computing environment or architecture that includes the infrastructure that supports providing item listing platform functionality (e.g., e-commerce functionality). The item listing platform support storing item in item databases and providing a search system for receiving queries and identifying search results based on the queries. The item listing platform may also provide a computing environment with features for managing, selling, buying, and recommending different types of items. Item listing platform 610 can specifically be for a content platform such as EBAY content platform or e-commerce platform, developed by EBAY INC., of San Jose, California.

The item listing platform 610 can provide item listing operations 630 and item listing interfaces 640. The item listing operations 630 can include service operations, communication operations, resource management operations, security operations, and fault tolerance operations that support specific tasks or functions in the item listing platform 610. The item listing interfaces 640 can include service interfaces, communication interfaces, resource interfaces, security interfaces, and management and monitoring interfaces that support functionality between the item listing platform components. The item listing operations 630 and item listing interfaces 640 can enable communication, coordination and seamless functioning of the item listing system 600.

By way of example, functionality associated with item listing platform 610 can include shopping operations (e.g., product search and browsing, product selection and shopping cart, checkout and payment, and order tracking); user account operations (e.g., user registration and authentication, and user profiles); seller and product management operations (e.g., seller registration and product listing and inventory management); payment and financial operations (e.g., payment processing, refunds and returns); order fulfillment operations (e.g., order processing and fulfillment and inventory management); customer support and communication interfaces (e.g., customer support chat/email and notifications); security and privacy interfaces (e.g., authentication and authorization, payment security); recommendation and personalization interfaces (e.g., product recommendations and customer reviews and ratings); analytics and report interfaces (e.g., sales and inventory reports, and user behavior analytics); and APIs and Integration Interfaces (e.g., APIs for Third-Party Integration).

The item listing platform 610 can provide item listing platform databases (e.g., item listing platform databases 650) to manage and store different types of data efficiently. The item listing platform databases 650 can include relational databases, NoSQL databases, search databases, cache databases, content management systems, analytics databases, payment gateway database, customer relationship management databases, log and error databases, inventory and supply chain databases, and multi-channel databases that are used in combination to efficiently manage data and provide e-commerce experience for users.

The item listing platform 610 supports applications (e.g., applications 660) that is a computer program or software component or service that serves a specific function or set of functions to fulfil a particular item listing platform requirement or user requirement. Applications can be client-side (user-facing) and server-side (backend). Applications can also include application without any AI support (e.g., application 662) application supported by traditional AI model (e.g., application 664), and applications supported by generative AI models (e.g., application 666). By way of example, applications can include an online storefront application, mobile shopping app, admin and management console, payment gateway integration, user account and authentication application, search and recommendation engines, inventory and stock management application, order processing and fulfillment application, customer support and communication tools, content management system, analytics and report applications, marketing and promotion applications, multi-channel integration applications, log and error tracking applications, customer relationship management (CRM) applications, security applications, and APIs and web services that are used in combination to efficiently deliver e-commerce experiences for users.

The items listing platform 610 can include a machine learning engine (e.g., machine learning engine 670). The machine learning engine 670 refers to machine learning framework or machine learning platform that provides the infrastructure and tools to design, train, evaluate, and deploy machine learning models. The machine learning engine 670 can serve as the backbone for developing and deploying machine learning applications and solutions. Machine learning engine 670 can also provide tools for visualizing data and model results, as well as interpreting model decisions to gain insights into how the model is making predictions.

The machine learning engine 670 can provide the necessary libraries, algorithms, and utilities to perform various tasks within the machine learning workflow. The machine learning workflow can include data processing, model selection, model training, model evaluation, hyperparameter tuning, scalability, model deployment, inference, integration, customization, data visualization. Machine learning engine 670 can include pre-trained models for various tasks, simplifying the development process. In this way, the machine learning engine 670 can streamline the entire machine learning process, from data preparation and model training to deployment and inference, making it accessible and efficient for different types of users (e.g., customers, data scientists, machine learning engineers, and developers) working on a wide range of machine learning applications.

Machine learning engine 670 can be implemented in the item listing system 600 as a component that leverages machine learning algorithms and techniques (e.g., machine learning algorithms 672) to enhance various aspects of the item listing system's functionality. Machine learning engine 670 can provide a selection of machine learning algorithms and techniques used to teach computers to learn from data and make predictions or decisions without being explicitly programmed. These techniques are widely used in various applications across different industries, and can include the following examples: supervised learning (e.g., linear regression: classification, support vector machines (SVM); unsupervised learning (e.g., clustering, principal component analysis (PCA), association rules (e.g., apriori); reinforcement learning (e.g., Q-Learning, deep Q-Network (DQN); and deep learning (e.g., neural networks, convolutional neural networks (CNN), and recurrent neural networks (RNN); and ensemble learning random forest.

Machine learning training data 120 supports the process of building, training, and fine-tuning machine learning models. Machine learning training data 120 consists of a labeled dataset that is used to teach a machine learning model to recognize patterns, make predictions, or perform specific tasks. Training data typically comprises two main components: input feature (X) and labels or target values (Y). Input features can include variables, attributes, or characteristics used as input to the machine learning model. Input features (X) can be numeric, categorical, or even textual, depending on the nature of the problem. For example, in a model for predicting house prices, input features might include the number of bedrooms, square footage, neighborhood, and so on. Labels or target values (Y) include the values that the model aims to predict or classify. Labels represent the desired output or the ground truth for each corresponding set of input features. For instance, in a spam email classifier, the labels would indicate whether each email is spam or not (i.e., binary classification). The training process involves presenting the model with the training data, and the model learns to make predictions or decisions by identifying patterns and relationships between the input features (X) and the target values (Y). A machine learning algorithm adjusts its internal parameters during training in order to minimize the difference between its predictions and the actual labels in the training data. Machine learning engine 670 can use historical and real-time data to train models and make predictions, continually improving performance and user experience.

Machine learning engine 670 can include machine learning models (e.g., machine learning models 676) generated using the machine learning engine workflow. Machine learning models 676 can include generative AI models and traditional AI models that can both be employed in the item listing system 600. Generative AI models are designed to generate new data, often in the form of text, images, or other media, based on patterns and knowledge learned from existing data. Generative AI models can be employed in various ways including content generation, product image generation, personalized product recommendations, natural language chatbots, and content summarization. Traditional AI models encompass a wide range of algorithms and techniques and can be employed in various ways including recommendation systems, predictive analytics, search algorithms, fraud detection, customer segmentation, image classification, Natural Language Processing (NLP) and A/B testing and optimization. In many cases, a combination of both generative and traditional AI models can be employed to provide a well-rounded and effective e-commerce experience, combining data-driven insights and creativity.

Machine learning engine 670 can be used to analyze data, make predictions, and automate processes to provide a more personalized and efficient shopping experience for users. By way of example, product recommendations search and filtering: pricing optimization, inventory and stock management: customer segmentation, churn prediction and retention, fraud detection, sentiment analysis, customer support and chatbots, image and video analysis, and ad targeting and marketing. The specific applications of machine learning within the item listing platform 610 can vary depending on the specific goals, available data, and resources.

### Example Distributed Computing System Environment

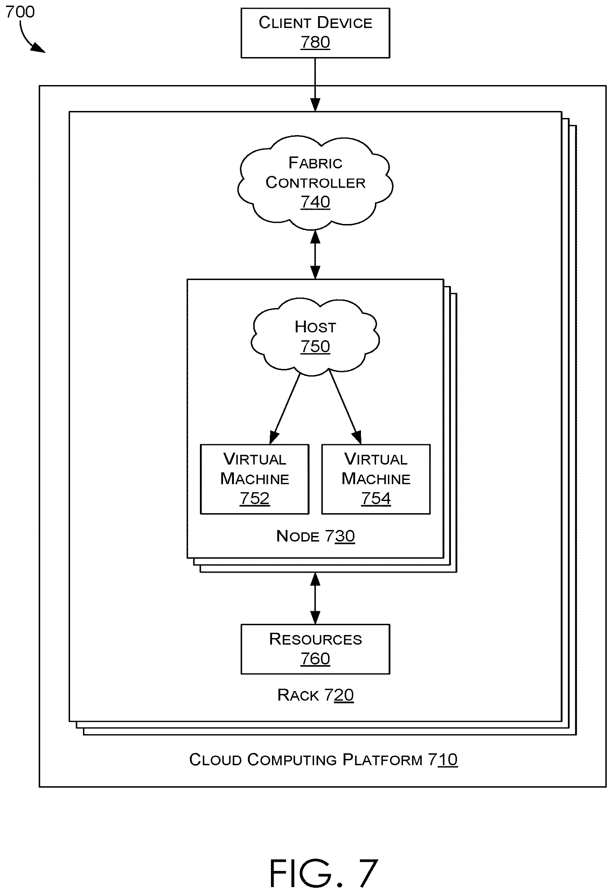

Referring now to FIG. 7, FIG. 7 illustrates an example distributed computing environment 700 in which implementations of the present disclosure may be employed. In particular, FIG. 7 shows a high-level architecture of an example cloud computing platform 710 that can host a technical solution environment, or a portion thereof (e.g., a data trustee environment). It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

Data centers can support distributed computing environment 700 that includes cloud computing platform 710, rack 720, and node 730 (e.g., computing devices, processing units, or blades) in rack 720. The technical solution environment can be implemented with cloud computing platform 710 that runs cloud services across different data centers and geographic regions. Cloud computing platform 710 can implement fabric controller 740 component for provisioning and managing resource allocation, deployment, upgrade, and management of cloud services. Typically, cloud computing platform 710 acts to store data or run service applications in a distributed manner. Cloud computing infrastructure 710 in a data center can be configured to host and support operation of endpoints of a particular service application. Cloud computing infrastructure 710 may be a public cloud, a private cloud, or a dedicated cloud.

Node 730 can be provisioned with host 750 (e.g., operating system or runtime environment) running a defined software stack on node 730. Node 730 can also be configured to perform specialized functionality (e.g., compute nodes or storage nodes) within cloud computing platform 710. Node 730 is allocated to run one or more portions of a service application of a tenant. A tenant can refer to a customer utilizing resources of cloud computing platform 710. Service application components of cloud computing platform 710 that support a particular tenant can be referred to as a multi-tenant infrastructure or tenancy. The terms service application, application, or service are used interchangeably herein and broadly refer to any software, or portions of software, that run on top of, or access storage and compute device locations within, a datacenter.

When more than one separate service application is being supported by nodes 730, nodes 730 may be partitioned into virtual machines (e.g., virtual machine 752 and virtual machine 754). Physical machines can also concurrently run separate service applications. The virtual machines or physical machines can be configured as individualized computing environments that are supported by resources 760 (e.g., hardware resources and software resources) in cloud computing platform 710. It is contemplated that resources can be configured for specific service applications. Further, each service application may be divided into functional portions such that each functional portion is able to run on a separate virtual machine. In cloud computing platform 710, multiple servers may be used to run service applications and perform data storage operations in a cluster. In particular, the servers may perform data operations independently but exposed as a single device referred to as a cluster. Each server in the cluster can be implemented as a node.

Client device 780 may be linked to a service application in cloud computing platform 710. Client device 780 may be any type of computing device, which may correspond to computing device 700 described with reference to FIG. 7, for example, client device 780 can be configured to issue commands to cloud computing platform 710. In embodiments, client device 780 may communicate with service applications through a virtual Internet Protocol (IP) and load balancer or other means that direct communication requests to designated endpoints in cloud computing platform 710. The components of cloud computing platform 710 may communicate with each other over a network (not shown), which may include, without limitation, one or more local area networks (LANs) and/or wide area networks (WANs).

### Example Computing Environment

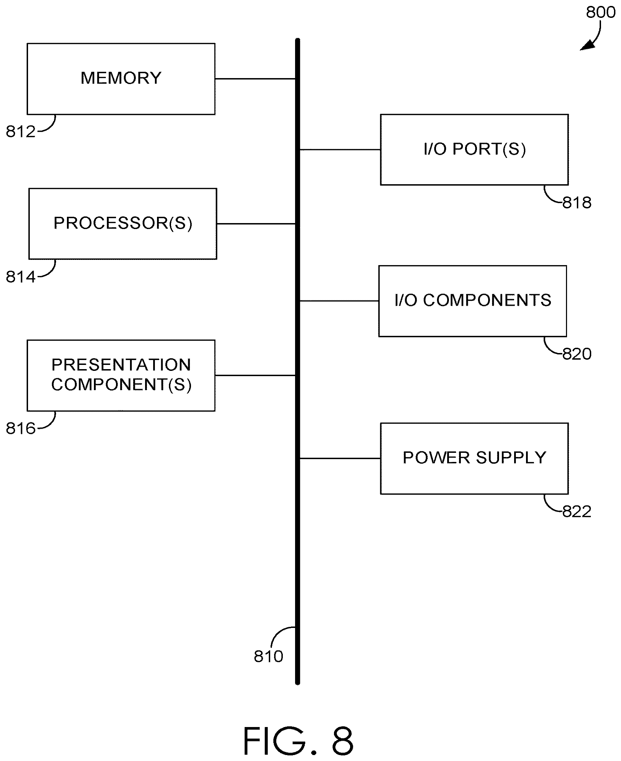

Having briefly described an overview of embodiments of the present invention, an example operating environment in which embodiments of the present invention may be implemented is described below in order to provide a general context for various aspects of the present invention. Referring initially to FIG. 8 in particular, an example operating environment for implementing embodiments of the present invention is shown and designated generally as computing device 800. Computing device 800 is but one example of a suitable computing environment and is not intended to suggest any limitation as to the scope of use or functionality of the invention. Neither should computing device 800 be interpreted as having any dependency or requirement relating to any one or combination of components illustrated.

The invention may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform tasks or implement particular abstract data types. The invention may be practiced in a variety of system configurations, including hand-held devices, consumer electronics, general-purpose computers, more specialty computing devices, etc. The invention may also be practiced in distributed computing environments where tasks are performed by remote-processing devices that are linked through a communications network.

With reference to FIG. 8, computing device 800 includes bus 810 that directly or indirectly couples the following devices: memory 812, one or more processors 814, one or more presentation components 816, input/output ports 818, input/output components 820, and illustrative power supply 822. Bus 810 represents what may be one or more buses (such as an address bus, data bus, or combination thereof). The various blocks of FIG. 8 are shown with lines for the sake of conceptual clarity, and other arrangements of the described components and/or component functionality are also contemplated. For example, one may consider a presentation component such as a display device to be an I/O component. Also, processors have memory. We recognize that such is the nature of the art and reiterate that the diagram of FIG. 8 is merely illustrative of an example computing device that can be used in connection with one or more embodiments of the present invention. Distinction is not made between such categories as "workstation," "server," "laptop," "hand-held device," etc., as all are contemplated within the scope of FIG. 8 and reference to "computing device."

Computing device 800 typically includes a variety of computer-readable media. Computer-readable media can be any available media that can be accessed by computing device 800 and includes both volatile and nonvolatile media, removable and non-removable media. By way of example, and not limitation, computer-readable media may comprise computer storage media and communication media.

Computer storage media include volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 800. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 812 includes computer storage media in the form of volatile and/or nonvolatile memory. The memory may be removable, non-removable, or a combination thereof. Exemplary hardware devices include solid-state memory, hard drives, optical-disc drives, etc. Computing device 800 includes one or more processors that read data from various entities such as memory 812 or I/O components 820. Presentation component(s) 816 present data indications to a user or other device. Exemplary presentation components include a display device, speaker, printing component, vibrating component, etc.

I/O ports 818 allow computing device 800 to be logically coupled to other devices including I/O components 820, some of which may be built in. Illustrative components include a microphone, joystick, game pad, satellite dish, scanner, printer, wireless device, etc.

### Additional Structural and Functional Features of Embodiments of the Technical Solution

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described in the paragraphs below may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the invention is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present invention are described with reference to a distributed computing environment; however the distributed computing environment depicted herein is merely exemplary. Components can be configured for performing novel aspects of embodiments, where the term "configured for" can refer to "programmed to" perform particular tasks or implement particular abstract data types using code. Further, while embodiments of the present invention may generally refer to the technical solution environment and the schematics described herein, it is understood that the techniques described may be extended to other implementation contexts.

Embodiments of the present invention have been described in relation to particular embodiments which are intended in all respects to be illustrative rather than restrictive. Alternative embodiments will become apparent to those of ordinary skill in the art to which the present invention pertains without departing from its scope.

From the foregoing, it will be seen that this invention is one well adapted to attain all the ends and objects hereinabove set forth together with other advantages which are obvious, and which are inherent to the structure.

It will be understood that certain features and sub-combinations are of utility and may be employed without reference to other features or sub-combinations. This is contemplated by and is within the scope of the claims.

The present disclosure further relates to the following aspects:
1. A computerized system comprising:
   one or more computer processors; and
   computer memory storing computer-useable instructions that, when used by the one or more computer processors, cause the one or more computer processors to perform operations, the operations comprising:
      accessing historical ad design-performance data associated with a plurality of historical advertising campaigns;
      based on the historical ad design-performance data, generating an ad optimization model, wherein the ad optimization model is generated based on modeling relationships between user groups, preference features, and preference linking;
      accessing an advertising campaign;
      using the ad optimization model and the advertising campaign, generating an ad optimization profile for the advertising campaign;
      using a design requirement generator, generating a fine-tuning prompt based on the ad optimization profile and the advertising campaign;
      using a design fine-tuning model and fine-tuning prompt, generating an updated advertising campaign; and
      deploying the updated advertising campaign.
2. The system of aspect 1, wherein the historical ad design-performance data comprises ad performance metrics and user feedback data, wherein generating the ad optimization model is based on offline operations comprising data analytics for user segmentation and preference insights associated with the historical ad design-performance data.
3. The system of aspect 1 or 2, wherein preference features comprise ad image manipulation factors and ad layout and content tuning factors; and/or wherein preference linking is based on a hybrid linking framework associated with manual labeling and data-driven rule mining or machine learning.
4. The system of any one of the preceding aspects, wherein the ad optimization model operates to generate condition text templates associated with ad layout and content tuning factors or ad image manipulation factors associated with ad optimization profiles that correspond to advertising campaigns.
5. The system of any one of the preceding aspects, wherein the design requirement generator is a Large Language Model that employs multi-modal layout fine-tuning prompt templates associated with ad optimization profiles to generate fine-tuning prompts for design fine-tuning models, wherein a multi-modal layout fine-tuning prompt template is a structured data format that defines key predefined elements for generating fine-tuning prompts; and/or wherein the design fine-tuning model is a multi-modal layout generator that that advertising campaign according to fine-tuning prompts.
6. The system of any one of the preceding aspects, wherein generating the updated advertising campaign is further based on user-selected preferences for updating the advertising campaign.
7. The system of any one of the preceding aspects, the operations further comprising:
   accessing ad design-performance data for the updated advertising campaign;
   using the ad design-performance data for the updated advertising campaign, the ad optimization model and the updated advertising campaign, generating a subsequent ad optimization profile for the updated advertising campaign;
   using the design requirement generator, generating a subsequent fine-tuning prompt based on the subsequent ad optimization profile and the updated advertising campaign;
   using the design fine-tuning model and the subsequent fine-tuning prompt, generating a subsequent updated advertising campaign; and
   deploying the subsequent updated advertising campaign.
8. The system of any one of the preceding aspects, wherein the ad optimization model, the design requirement generator, and the design fine-tuning model define an advertising campaign management engine associated with real-time performance metrics, design optimization, and automated adjustments.
9. One or more computer-storage media having computer-executable instructions embodied thereon that, when executed by a computing system having a processor and memory, cause the processor to perform operations, the operations comprising:
   accessing an advertising campaign;
   using an ad optimization model and the advertising campaign, generating an ad optimization profile for the advertising campaign, wherein the ad optimization profile is associated with a user;
   using a design requirement generator, generating a fine-tuning prompt based on the ad optimization profile and the advertising campaign;
   using a design fine-tuning model and fine-tuning prompt, generating an updated advertising campaign; and
   deploying the updated advertising campaign for presentation to the user associated with the ad optimization profile.
10. The media of aspect 9, wherein ad design-performance data comprises ad performance metrics and user feedback data, wherein generating the ad optimization model is based on offline operations comprising data analytics for user segmentation and preference insights associated with the ad design-performance data; and/or wherein ad optimization profile is associated with a user profile and attributes of the user that are used to adapt ad layout and content tuning factors and ad image manipulation factors for generating the updated advertising campaign.
11. The media of aspect 9 or 10, wherein preference features comprise ad image manipulation factors and ad layout and content tuning factors.
12. The media of any one of aspect 9 to 11, wherein the ad optimization model operates to generate condition text templates associated with ad layout and content tuning factors or ad image manipulation factors associated with ad optimization profiles that correspond to advertising campaigns.
13. A computer-implemented method, the method comprising:
   accessing an advertising campaign;
   using an ad optimization model and the advertising campaign, generating an ad optimization profile for the advertising campaign;
   using a design requirement generator, generating a fine-tuning prompt based on the ad optimization profile and the advertising campaign;
   using a design fine-tuning model and the fine-tuning prompt, generating an updated advertising campaign; and
   deploying the updated advertising campaign.
14. The method of aspect 13, wherein ad design-performance data comprises ad performance metrics and user feedback data, wherein the ad optimization model is generated based on offline operations comprising data analytics for user segmentation and preference insights associated with the ad design-performance data; and/or wherein the ad optimization profile is associated with a user profile of a user or a targeted user group, the user profile is used to adapt ad layout and content tuning factors and ad image manipulation factors for generating the updated advertising campaign.
15. The method of aspect 13 or 14, wherein preference features comprise ad image manipulation factors and ad layout and content tuning factors; and/or wherein the ad optimization model operates to generate condition text templates associated with ad layout and content tuning factors or ad image manipulation factors associated with ad optimization profiles that correspond to advertising campaigns.
16. One or more computer-storage media having computer-executable instructions embodied thereon that, when executed by a computing system having a processor and memory, cause the processor to perform the method according to any one of aspects 13 to 15.

## Claims

1. A computerized system comprising:
one or more computer processors; and
computer memory storing computer-useable instructions that, when used by the one or more computer processors, cause the one or more computer processors to perform operations, the operations comprising:
accessing historical ad design-performance data associated with a plurality of historical advertising campaigns;
based on the historical ad design-performance data, generating an ad optimization model, wherein the ad optimization model is generated based on modeling relationships between user groups, preference features, and preference linking;
accessing an advertising campaign;
using the ad optimization model and the advertising campaign, generating an ad optimization profile for the advertising campaign;
using a design requirement generator, generating a fine-tuning prompt based on the ad optimization profile and the advertising campaign;
using a design fine-tuning model and fine-tuning prompt, generating an updated advertising campaign; and
deploying the updated advertising campaign.

2. The system of claim 1, wherein the historical ad design-performance data comprises ad performance metrics and user feedback data, wherein generating the ad optimization model is based on offline operations comprising data analytics for user segmentation and preference insights associated with the historical ad design-performance data.

3. The system of claim 1 or 2,
wherein preference features comprise ad image manipulation factors and ad layout and content tuning factors; and/or
wherein preference linking is based on a hybrid linking framework associated with manual labeling and data-driven rule mining or machine learning.

4. The system of any one of the preceding claims, wherein the ad optimization model operates to generate condition text templates associated with ad layout and content tuning factors or ad image manipulation factors associated with ad optimization profiles that correspond to advertising campaigns.

5. The system of any one of the preceding claims,
wherein the design requirement generator is a Large Language Model that employs multi-modal layout fine-tuning prompt templates associated with ad optimization profiles to generate fine-tuning prompts for design fine-tuning models, wherein a multi-modal layout fine-tuning prompt template is a structured data format that defines key predefined elements for generating fine-tuning prompts; and/or
wherein the design fine-tuning model is a multi-modal layout generator that that advertising campaign according to fine-tuning prompts.

6. The system of any one of the preceding claims, wherein generating the updated advertising campaign is further based on user-selected preferences for updating the advertising campaign.

7. The system of any one of the preceding claims, the operations further comprising:
accessing ad design-performance data for the updated advertising campaign;
using the ad design-performance data for the updated advertising campaign, the ad optimization model and the updated advertising campaign, generating a subsequent ad optimization profile for the updated advertising campaign;
using the design requirement generator, generating a subsequent fine-tuning prompt based on the subsequent ad optimization profile and the updated advertising campaign;
using the design fine-tuning model and the subsequent fine-tuning prompt, generating a subsequent updated advertising campaign; and
deploying the subsequent updated advertising campaign.

8. The system of any one of the preceding claims, wherein the ad optimization model, the design requirement generator, and the design fine-tuning model define an advertising campaign management engine associated with real-time performance metrics, design optimization, and automated adjustments.

9. One or more computer-storage media having computer-executable instructions embodied thereon that, when executed by a computing system having a processor and memory, cause the processor to perform operations, the operations comprising:
accessing an advertising campaign;
using an ad optimization model and the advertising campaign, generating an ad optimization profile for the advertising campaign, wherein the ad optimization profile is associated with a user;
using a design requirement generator, generating a fine-tuning prompt based on the ad optimization profile and the advertising campaign;
using a design fine-tuning model and fine-tuning prompt, generating an updated advertising campaign; and
deploying the updated advertising campaign for presentation to the user associated with the ad optimization profile.

10. The media of claim 9,
wherein ad design-performance data comprises ad performance metrics and user feedback data, wherein generating the ad optimization model is based on offline operations comprising data analytics for user segmentation and preference insights associated with the ad design-performance data; and/or
wherein ad optimization profile is associated with a user profile and attributes of the user that are used to adapt ad layout and content tuning factors and ad image manipulation factors for generating the updated advertising campaign.

11. The media of claim 9 or 10, wherein preference features comprise ad image manipulation factors and ad layout and content tuning factors.

12. The media of any one of claims 9 to 11, wherein the ad optimization model operates to generate condition text templates associated with ad layout and content tuning factors or ad image manipulation factors associated with ad optimization profiles that correspond to advertising campaigns.

13. A computer-implemented method, the method comprising:
accessing an advertising campaign;
using an ad optimization model and the advertising campaign, generating an ad optimization profile for the advertising campaign;
using a design requirement generator, generating a fine-tuning prompt based on the ad optimization profile and the advertising campaign;
using a design fine-tuning model and the fine-tuning prompt, generating an updated advertising campaign; and
deploying the updated advertising campaign.

14. The method of claim 13,
wherein ad design-performance data comprises ad performance metrics and user feedback data, wherein the ad optimization model is generated based on offline operations comprising data analytics for user segmentation and preference insights associated with the ad design-performance data; and/or
wherein the ad optimization profile is associated with a user profile of a user or a targeted user group, the user profile is used to adapt ad layout and content tuning factors and ad image manipulation factors for generating the updated advertising campaign.

15. The method of claim 13 or 14,
wherein preference features comprise ad image manipulation factors and ad layout and content tuning factors; and/or
wherein the ad optimization model operates to generate condition text templates associated with ad layout and content tuning factors or ad image manipulation factors associated with ad optimization profiles that correspond to advertising campaigns.
